# EUROPÄISCHE PATENTSCHRIFT

(11) **EP 1 793 391 B1**
(45) Veröffentlichungstag und Bekanntmachung des Hinweises auf die Patenterteilung: **20.01.2010**
(21) Anmeldenummer: 06024853.1
(22) Anmeldetag: 30.11.2006
(51) Int. Cl.: H01B 12/00, H02G 15/34, H01R 4/68

(54) **Stromzuleitung für kryogene elektrische Systeme**
Power line for cryogenic electrical systems
Ligne d'alimentation pour systèmes électriques cryogènes

(30) Priorität: 05.12.2005 DE 102005058029
(43) Veröffentlichungstag der Anmeldung: 06.06.2007
(73) Patentinhaber: Zenergy Power GmbH, 53359 Rheinbach (DE)
(72) Erfinder: Kellers, Jürgen, Dr., 45721 Haltern (DE); Braun, Thomas, 56729 Ettringen (DE); Wiezoreck, Jan, Dr., 53111 Bonn (DE)
(74) Vertreter: Prietsch, Reiner

(56) Entgegenhaltungen:
- EP-A- 1 489 692
- EP-A- 1 536 489
- WO-A-00/14827
- US-A- 6 034 324
- US-A- 6 154 103

## Beschreibung

Die Erfindung betrifft eine Stromzuleitung zur Verbindung eines supraleitenden Verbrauchersystems mit einem Stromeinspeisepunkt, der sich auf einer höheren Temperatur als das Verbrauchersystem befindet und die einen Träger mit je einem Anschlußstück an jedem Ende des Trägers und mehrere bandförmige, mechanisch und elektrisch parallele Hochtemperatursuptraleiter (HTSL) umfasst.'Der Träger ist aus einer langgestreckten Platte aus einem schlecht wärmeleitenden Werkstoff. Auf der Platte sind parallel nebeneinander die HTSL angeordnet. Jeder HTSL umfasst einen normalleitenden Strompfad.

Die WO 00/14827 A1 zeigt eine Stromzuführung der eingangs genannten Gattung. Zur mechanischen Befestigung und elektrischen Kontaktierung der Platte bzw. der HTSL werden die Enden der Platte in entsprechende Ausnehmungen der Anschlußstücke eingeschoben. Anschließend werden die Ausnehmungen mit Lot verfüllt. Dadurch wird nicht nur eine gute elektrische Kontaktierung sondern auch eine gute thermische Verbindung zwischen den miteinander verbundenen Teilen geschaffen.

Ebenso offenbart die EP-A-1 536 489 eine Stromzuführung mit allen im Oberbegriff des Anspruchs 1 genanten Merkmalen.

Aus der US 6 034 324 ist eine supraleitende Stromzuleitung bekannt, bei der bandförmige Hochtemperatursupraleiter zu einem Stapel zusammengesetzt und diese Stapel auf der Mantelfläche eines etwa zylindrischen Trägers parallel zur Achse des Trägers angebracht sind. Diese Stromzuleitung hat den Nachteil, dass die kritische Stromdichte eines einzelnen bandförmigen Supraleiters in dem Verbund nicht erreicht wird, da die Magnetfelder der stromdurchflossenen Supraleiter, insbesondere aufgrund der dichten Packung, additiv superponieren. Zudem ist die Herstellung der Stapel aufgrund der notwendigen Löt- oder Sinterschritte kostenintensiv.

Der Erfindung liegt die Aufgabe zugrunde, eine Stromzuleitung zur Verbindung eines supraleitenden Verbrauchersystems mit einem Stromeinspeisepunkt zu schaffen, die eine hohe kritische Stromdichte mit einer guten thermischen Isolation zwischen dem Verbrauchersystem und dem Einspeisepunkt verbindet und kostengünstig herstellbar ist.

Diese Aufgabe ist durch eine Stromzuführung nach dem Anspruch 1 gelöst.

Die Stromzuleitung hat einen Träger aus mindestens einer langgestreckten Platte aus einem schlecht wärmeleitenden Werkstoff und mit einem Verhältnis von Breite zu Dicke von mindestens 3:1, auf dem die bandförmigen HTSL parallel nebeneinander angeordnet sind und die je einen normalleitenden Strompfad umfassen.

Weil der Träger aus einer langgestreckten, vorzugsweise im wesentlichen planen Platte aus einem schlecht wärmeleitenden Werkstoff ist, ist eine gute thermische Isolation gewährleistet. Weil die bandförmigen HTSL auf der Platte in Längsrichtung parallel nebeneinander angeordnet sind, wird eine hohe kritische Stromdichte erreicht, da die Magnetfelder weiter entfernter HTSL nicht ins Gewicht fallen, weil die Magnetfeldstärke mit 1/r² abnimmt. Durch den zusätzlichen, normalleitenden Strompfad wird die Ausfallsicherheit der Stromzuleitung erhöht.

Zur Inbetriebnahme des Verbrauchersystems wird es zunächst abgekühlt. Dabei wird auch zumindest das dem Verbrauchersystem zugewandte Ende der Stromzuleitung auf etwa die Temperatur des Verbrauchersystems heruntergekühlt. Hat der Werkstoff des Trägers etwa den gleichen Wärmeausdehnungskoeffizienten wie die bandförmigen HTSL, so werden Scherspannungen zwischen HTSL und Träger vermieden. Solche Scherspannungen würden zu einem unerwünschten Durchbiegen oder einer Streckung der Stromzuleitung und im Extremfall sogar zum Ablösen der bandförmigen HTSL von dem Träger führen.

Ein besonders geeigneter Werkstoff für die Trägerplatte ist glasfaserverstärkter Kunststoff (GFK), da GFK sowohl ein guter elektrischer als auch thermischer Isolator ist.

Die bandförmigen HTSL können zwischen der ersten Platte und einer zweiten, gleichartigen Platte angeordnet sein. Die sich so ergebende Sandwichstruktur ist mechanisch stabil und im Falle elektrisch isolierender Platten sind die parallelen bandförmigen HTSL gegen Kurzschlüsse durch Kontakt, z.B. mit einem Gehäuseteil, geschützt (Anspruch 2).

Ist die Platte oder sind die Platten an jedem ihrer Enden mit je einem normalleitenden Anschlußstück mechanisch verbunden, und sind die bandförmigen HTSL mit den Anschlußstücken elektrisch kontaktiert, so kann über das jeweilige Anschlußstück eine sowohl mechanisch als auch elektrisch zuverlässige Verbindung mit dem Verbrauchersystem und dem jeweiligen Stromeinspeisepunkt hergestellt werden. Die Anschlußstücke verbinden die bandförmigen HTSL parallel miteinander und bieten durch ihre Plattenform ausreichend Platz für den Anschluß auch mehrerer querschnittsstarker, normalleitender Kupferkabel oder -litzen.

Werden die bandförmigen HTSL direkt mit dem supraleitenden Verbrauchersystem verbunden, so entsteht keine abzuführende Wärme durch den Ohm'schen Widerstand in Normalleitern. Die direkte Verbindung kann aus einem HTSL- oder BCS-Anschlußstück bestehen.

Die elektrischen Kontaktierungen können als Lötverbindung ausgeführt sein. Dies gewährleistet auch bei tiefen Temperaturen eine zuverlässige Kontaktierung. Zudem sind Lötverbindungen kostengünstig herstellbar.

Bevorzugt wird die Stromzuleitung an ihren beiden Enden mittels je einer Kühlvorrichtung gekühlt. Die Kühlvorrichtung am wärmeren Ende hält dieses auf einer Temperatur zwischen etwa 50 und etwa 100 K. Dieser Temperaturbereich ist zum sicheren Betrieb vieler HTSL ausreichend. Das kältere Ende der Stromzuleitung wird auf eine Temperatur < 35 K, vorzugsweise < 12 K, gekühlt. Bei diesen Temperaturen werden bereits einige Tieftemperatur-Supraleiter wie NbTi oder Nb3Sn supraleitend.

Die bandförmigen HTSL können nach dem Pulver-im-Rohr-Verfahren (PIT) hergestellte Multifilamentleiter oder Dünnschicht-HTSL, sog. Coated Conductors, sein. Besonders vorteilhaft besteht im letzteren Fall jeder bandförmige HTSL aus zwei spiegelsymmetrisch zur neutralen Faser angeordneten Dünnschicht-HTSL.

Die Stomzuleitung kann zum Schutz und zur elektrischen Isolation zumindest teilweise mit einem polymerisierenden Kunststoff, z.B. Polyethylen (PE), Polyurethan (PU) oder Polypropylen (PP), beschichtet sein.

Der normalleitende Strompfand der bandförmigen HTSL kann z.B. ein auf einen Dünnschicht-HTSL aufgebrachter metallischer Shunt oder der metallische Anteil eines nach dem PIT-Verfahren hergestellten Multifilamentleiters sein.

Der metallische Strompfad besteht vorzugsweise aus Metallen oder einer Metalllegierung deren Wärmeleitfähigkeit mit sinkender Temperatur abnimmt.

Für das PIT-Verfahren kann beispielsweise Silber oder eine Silberlegierung verwendet werden. Der metallische Strompfad von Dünnschichtleitern ist bevorzugt aus Kupfer oder Gold. Besonders geeignet ist eine Silberlegierung mit einer Golddotierung von etwa 3 bis etwa 10 %, insbesondere etwa 4,6 Gew.%. Bei einer Temperatur unterhalb etwa 20 K sinkt durch die Golddotierung die thermische Leitfähigkeit um etwa zwei Größenordnungen, ohne dass sich die elektrische Stromtragfähigkeit wesentlich verändert.

Nachfolgend wird die Erfindung anhand von in der Zeichnung dargestellten Ausführungsbeispielen beschrieben. Es zeigt:
- Fig. 1: eine schematische, vereinfachte Darstellung einer Stromzuleitung,
- Fig. 2a: eine Seitenansicht der Stromzuleitung gem. Fig.1,
- Fig. 2b: eine Aufsicht auf die gleiche Stromzuleitung,
- Fig. 3: einen Dünnschicht-HTSL,
- Fig. 4: einen Verbund aus zwei Dünnschicht-HTSL und
- Fig. 5: eine Einzelheit der Stromzuführung im Schnitt.

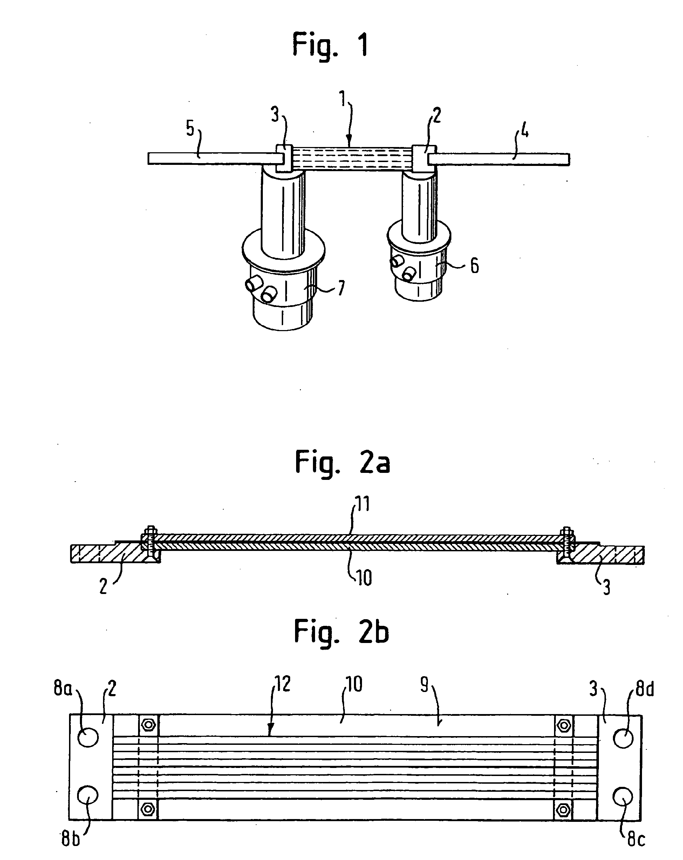

Figur 1 zeigt eine Stromzuleitung 1 zum Verbinden eines supraleitende Verbrauchersystems, auf einer Temperatur z.B. zwischen 1 K und 30 K, mit einem Stromeinspeisepunkt auf Raumtemperatur. Ein metallischer Leiter 4 überbrückt die Temperaturdifferenz zwischen dem nicht dargestellten Stromspeisepunkt und einem ersten Anschlußstück 2, das durch eine erste Kältemaschine 6 auf einer Temperatur von etwa 60 K bis etwa 70 K gehalten wird. Die Stromzuleitung 1 überbrückt die Temperaturdifferenz bis zu einem zweiten Anschlußstück 3, das durch eine zweite Kältemaschine 7 auf einer Temperatur von etwa 1 K bis etwa 30 K gehalten wird. Von dem zweiten Anschlußstück 3 geht ein metallischer Leiter oder ein Supraleiter 5 (HTSL- oder auch Tieftemperatur-Supraleiter) ab, der die Verbindung zu dem supraleitenden Verbrauchersystem herstellt. Die Kältemaschinen 6, 7 können z.B. Verdampfungskühler sein. Ebenso geeignet sind Brücken zu kalten Strahlungsschilden. Ist die Temperatur des supraleitenden Verbrauchersystems in etwa gleich der Temperatur des zweiten Anschlußstückes 3, so kann auf die Kältemaschine 7 verzichtet werden.

Figur 2a zeigt die Stromzuleitung 1 gemäß Fig. 1 in der Seitenansicht, Fig. 2b in der Aufsicht, jedoch ohne obere Trägerplatte. Die Stromzuleitung 1 besteht aus einem langgestreckten planen GFK-Träger 10, der mit seinen beiden Enden jeweils in eine Ausnehmung eines ansonsten quaderförmigen Anschlußstücks 2 oder 3 eingelegt ist. Die Anschlußstücke 2, 3 sind an ihrer Unterseite plan, um eine gute Wärmeabführung durch Kältemaschinen zu ermöglichen. Die Oberseite des GFK-Trägers 10 bildet mit den Oberseiten der Anschlußstücke 2, 3 eine ebene Fläche 9. Auf dieser ebenen Fläche 9 liegen jeweils parallel zueinander bandförmige HTSL 12. Die bandförmigen HTSL sind an ihren beiden Enden jeweils mit einem der Anschlußstücke 2, 3 elektrisch leitend verbunden. Auf dem bandförmigen HTSL 12 liegt ein oberer GFK-Träger 11 (nur in Fig. 2a dargestellt), der gemeinsam mit dem Träger 10 mit den Anschlußstücken 2, 3 verbolzt ist. Der obere Träger 11 schützt die bandförmigen HTSL 12 vor mechanischer Beschädigung und verbessert zugleich die mechanische Belastbarkeit der Stromzuführung 1. Zur Befestigung der Stromzuleitung 1, z.B. an den Kältemaschinen 6, 7 (s. Fig. 1) und dem metallischen Leiter 4 bzw. dem Supraleiter 5, sind Bohrungen 8a, 8b, 8c und 8d vorgesehen.

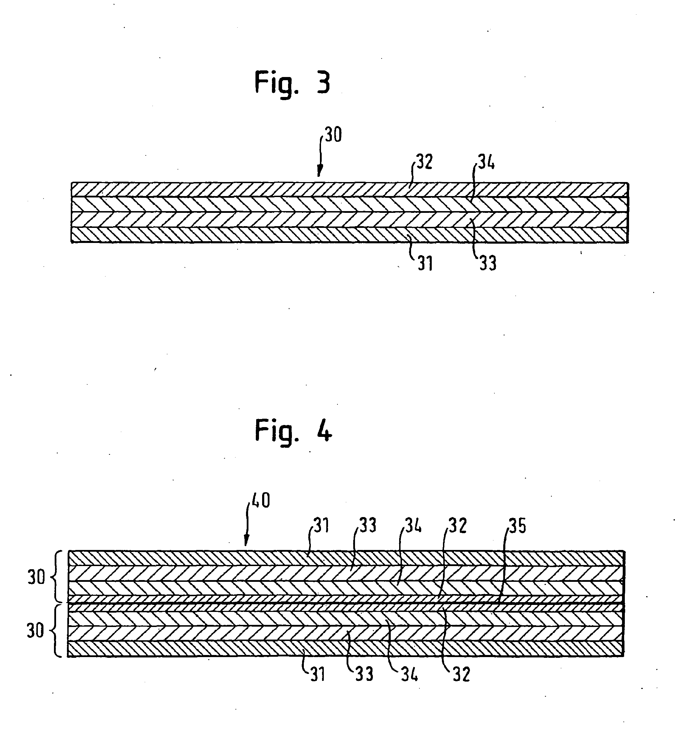

Fig. 3 zeigt einen der bandförmigen Dünnschicht-HTSL 12 im Längsschnitt. Der Dünnschicht-HTSL besteht aus einem Substrat 31, auf das eine Pufferschicht 33 aufgebracht ist. Auf der Pufferschicht 33 ist eine HTSL-Schicht 34 aus ReBCuO, wobei Re für ein Seltenerdmetall, beispielsweise Yttrium, steht. Auf der HTSL-Schicht 34 ist eine normalleitende (Shunt-) Metallschicht 32. Zur Erhöhung der elektrischen Leitfähigkeit bei gleichzeitiger Reduzierung der thermischen Leitfähigkeit ist die Metallschicht 32 mit rund 4 % Gold dotiert.

Fig. 4 zeigt einen Verbund 40 aus zwei Dünnschicht-HTSL 30 gemäß Fig. 3, die gestapelt sind und deren innenliegende Metallschichten 32 durch eine Lotschicht 35 leitend verbunden sind. Die neutrale Faser liegt in der Lotschicht 35.

Die Verwendung solcher "Neutralfaserleiter" ist dann vorteilhaft, wenn die Stromzuführung gebogen wird, weil dann nur geringe Zug- und Druckkräfte an den HTSL-Schichten angreifen. Insbesondere Zugkräfte könnten andernfalls zu die Stromleitfähigkeit beeinträchtigenden Mikrorissen in den HTSL-Schichten führen. Weil die beiden Substratschichten 31 unten bzw oben liegen, d.h. Außenschichten sind, sind die Metallschichten 32 und die HTSL-Schichten 34 weitgehend vor mechanischer Beschädigung geschützt. Die Pufferschichten 33 sind nichtleitend, wodurch die Substratschichten 31 von den elektrisch leitenden Schichten 32, 34 isoliert sind.

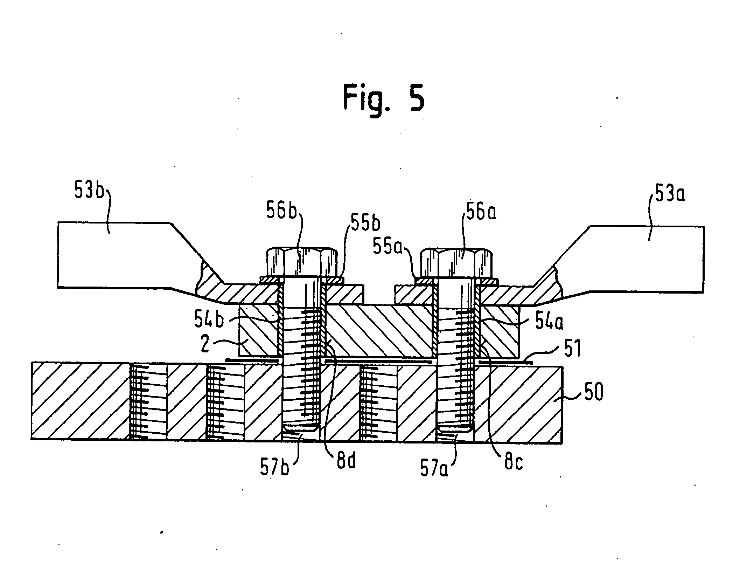

Figur 5 zeigt einen vergrößerten Schnitt durch einen der Anschlußbereiche der Stromleitung in Fig. 2a, 2b. Auf einem Träger 50, der mit einer Kältemaschine (nicht dargestellt) in Verbindung steht, liegt das Anschlußstück 2 der Stromzuleitung. Zwischen dem Anschlußstück 2 und dem Träger 50 ist eine Isolierschicht 51, beispielsweise aus Kapton, die den Träger 50 und das Anschlußstück 2 elektrisch voneinander isoliert, aber gleichzeitig eine gute thermische Verbindung herstellt. Die Stromzuleitung ist mit dem Stromeinspeisepunkt über zwei Kupferkabel (nicht dargestellt) verbunden, die in jeweils einem Kabelschuh 53a und 53b enden. Die Kabelschuhe 53a und 53b liegen bündig auf dem Anschlußstück 2 auf und sind mit je einer Schraube 56a und 56b gesichert. Die Schrauben 56a und 56b durchsetzen jeweils einen Kabelschuh 53a und 53b, die Bohrungen 8d und 8c des Anschlußstückes 2 sowie die Isolierschicht 51. Die Gewinde der Schrauben 56a und 56 b greifen in je eine Gewindebohrung 57a und 57b im Träger 50 ein. Die Schrauben 56a und 56b sind durch je eine Isolierhülse 54a und 54b sowie je eine Isolierscheibe 55a und 55b vom Anschlußstück 2 und den Kabelschuhen 53a, 53b elektrisch isoliert.

## Patentansprüche

1. Stromzuleitung zur Verbindung eines supraleitenden Verbrauchersystems mit einem Stromeinspeisepunkt, der sich auf einer höheren Temperatur als das Verbrauchersystem befindet, aus
- einem Träger,
- zwei leitenden Anschlussstücken (2, 3),
- mehreren bandförmigen, mechanisch und elektrisch parallelen Hochtemperatursupraleitern (12, 30, 40), wobei
- der Träger aus mindestens einer langgestreckten Platte (10) aus einem schlecht wärmeleitenden Werkstoff besteht, auf welcher Platte die bandförmigen Hochtemperatursupraleiter (12, 30, 40) parallel nebeneinander angeordnet sind,
- jeder der bandförmigen Hochtemperatursupraleiter (12, 30, 40) einen normalleitenden Strompfad umfasst,
- der Träger an jedem seiner Enden mit je einem der Anschlussstücke (2, 3) verbunden ist,
**dadurch gekennzeichnet, dass**
- die Oberseite der Platte (10) mit den Oberseiten der Anschlussstücke (2, 3) eine planebene Fläche (9) bildet, auf der die bandförmigen Hochtemperatursupraleiter (12, 30, 40) aufliegen und
- die bandförmigen Hochtemperatursupraleiter (12, 30, 40) an ihren beiden Enden jeweils auf der Oberseite eines der Anschlussstücke (2, 3) aufliegen und mit dieser elektrisch verbunden sind.

2. Stromzuleitung nach Anspruch 1, **dadurch gekennzeichnet, dass** die bandförmigen Hochtemperatursupraleiter (12, 30, 40) zwischen der ersten Platte (10) und einer zweiten, gleichartigen Platte (11) angeordnet sind.

3. Stromzuleitung nach Anspruch 1 oder 2, **dadurch gekennzeichnet, dass** mindestens ein Anschlussstück (2, 3) aus einem BCS- oder hochtemperatursupraleitenden Material besteht.

4. Stromzuleitung nach einem der Ansprüche 1 bis 3, **dadurch gekennzeichnet, dass** mindestens eine der elektrischen Kontaktierungen eine Lötverbindung ist.

5. Stromzuleitung nach einem der Ansprüche 1 bis 4, **dadurch gekennzeichnet, dass** sie an ihrem wärmeren Ende mit einer ersten Kühlvorrichung (6), die dieses Ende auf einer Temperatur von 50 bis 100 K hält und an ihrem kälteren Ende mit einer zweiten Kühlvorrichtung (7), die dieses Ende auf einer Temperatur < 35 K hält, verbunden ist.

6. Stromzuleitung nach einem der Ansprüche 1 bis 5, **dadurch gekennzeichnet, dass** die bandförmigen Hochtemperatursupraleiter (12) aus je einem nach dem PIT-Verfahren hergestellten Multifilamentleiter bestehen.

7. Stromzuleitung nach einem der Ansprüche 1 bis 6, **dadurch gekennzeichnet, dass** die bandförmigen Hochtemperatursupraleiter (12) Dünnschicht-HTSL (30, 40) sind.

8. Stromzuleitung nach einem der Ansprüche 1 bis 7, **dadurch gekennzeichnet, dass** die Stromzuleitung mindestens einseitig mit einem polymerisierenden Kunststoff beschichtet ist.

9. Stromzuleitung nach einem der Ansprüche 1 bis 8, **dadurch gekennzeichnet, dass** der normalleitende Strompfad jedes bandförmigen Hochtemperatursupraleiters (30, 40) aus einem Metall oder einer Metalllegierung mit einer mit sinkender Temperatur abnehmenden Wärmeleitfähigkeit ist.

## Claims

1. A power feed line for connecting a superconductive consumer system with a power feeding point which is at a higher temperature than the consumer system, consisting of
- a support;
- two conductive connection pieces (2, 3);
- several strip-like high-temperature superconductors (12, 30, 40) which are parallel mechanically and electrically, with
- the support consisting of at least one oblong plate (10) made from a material with adverse heat-conducting properties, on which plate the strip-like high-temperature superconductors (12, 30, 40) are arranged parallel next to one another,
- each of the strip-like high-temperature superconductors (12, 30, 40) comprising a normally conductive current path;
- the support being connected at each of its ends with one each of the connection pieces (2, 3);
**characterized in that**
- the upper side of the plate (10) forms a plane-parallel surface (9) with the upper sides of the connection pieces (2, 3) on which the strip-like high-temperature superconductors (12, 30, 40) are placed, and
- the strip-like high-temperature superconductors (12, 30, 40) each rest at their two ends on the upper side of one of the connection pieces (2, 3) and are electrically connected with the same.

2. A power feed line according to claim 1, **characterized in that** the strip-like high-temperature superconductors (12, 30, 40) are arranged between the first plate (10) and a second similar plate (11).

3. A power feed line according to claim 1 or 2, **characterized in that** at least one connection piece (2, 3) consists of a BCS or high-temperature superconductive material.

4. A power feed line according to one of the claims 1 to 3, **characterized in that** at least one of the electric contacts is a soldered joint.

5. A power feed line according to one of the claims 1 to 4, **characterized in that** it is connected at its warmer end with a first cooling apparatus (6) which holds this end to a temperature of 50 to 100 K and at its colder end with a second cooling apparatus (7) which holds this end at a temperature of < 35 K.

6. A power feed line according to one of the claims 1 to 5, **characterized in that** the strip-like high-temperature superconductors (12) each consist of one multifilament conductor which is produced according to the PIT method.

7. A power feed line according to one of the claims 1 to 6, **characterized in that** the strip-like high-temperature superconductors (12) are thin-film high-temperature superconductors (30, 40).

8. A power feed line according to one of the claims 1 to 7, **characterized in that** the power feed line is coated at least on one side with a polymerizing plastic.

9. A power feed line according to one of the claims 1 to 8, **characterized in that** the normal-conducting current path of each of the strip-like high-temperature superconductors (30, 40) consists of a metal or a metal alloy with a thermal conductivity which decreases with decreasing temperature.

## Revendications

1. Ligne d'alimentation électrique destinée à relier un système consommateur supraconducteur à un point d'alimentation électrique qui se trouve à une température plus élevée que le système consommateur, formée par
- un support,
- deux connecteurs conducteurs (2, 3),
- plusieurs supraconducteurs à haute température en forme de bandes (12, 30, 40) disposés parallèlement du point de vue mécanique et électrique,
- le support étant formé par une plaque allongée (10) faite d'un matériau qui est mauvais conducteur thermique, sur laquelle les supraconducteurs à haute température en forme de bandes (12, 30, 40) sont disposés parallèlement les uns à côté des autres,
- chacun des supraconducteurs à haute température en forme de bandes (12, 30, 40) comprenant un trajet de courant de conduction normale,
- le support étant relié à chacune de ses extrémités à l'un des connecteurs (2, 3),
**caractérisée en ce que**
- la face supérieure de la plaque (10) forme avec les faces supérieures des connecteurs (2, 3) une surface plane (9) sur laquelle reposent les supraconducteurs à haute température en forme de bandes (12, 30, 40) et
- les supraconducteurs à haute température en forme de bandes (12, 30, 40) reposent par chacune de leurs deux extrémités sur la face supérieure de l'un des connecteurs (2, 3) et sont connectés électriquement à celui-ci.

2. Ligne d'alimentation électrique selon la revendication 1, **caractérisée en ce que** les supraconducteurs à haute température en forme de bandes (12, 30, 40) sont disposés entre la première plaque (10) et une deuxième plaque (11) semblable.

3. Ligne d'alimentation électrique selon la revendication 1 ou 2, **caractérisée en ce qu'**au moins un connecteur (2, 3) se compose d'un matériau BCS ou supraconducteur à haute température.

4. Ligne d'alimentation électrique selon l'une des revendications 1 à 3, **caractérisée en ce qu'**au moins un des contacts électriques est un assemblage brasé.

5. Ligne d'alimentation électrique selon l'une des revendications 1 à 4, **caractérisée en ce qu'**elle est reliée à son extrémité la plus chaude à un premier dispositif de refroidissement (6) qui maintient cette extrémité à une température de 50 à 100 K et à son extrémité la plus froide à un deuxième dispositif de refroidissement (7) qui maintient cette extrémité à une température < 35 K.

6. Ligne d'alimentation électrique selon l'une des revendications 1 à 5, **caractérisée en ce que** les supraconducteurs à haute température en forme de bandes (12) se composent chacun d'un conducteur multifilaments fabriqué selon le procédé PIT.

7. Ligne d'alimentation électrique selon l'une des revendications 1 à 6, **caractérisée en ce que** les supraconducteurs à haute température en forme de bandes (12) sont des HTSL en couche mince (30, 40).

8. Ligne d'alimentation électrique selon l'une des revendications 1 à 7, **caractérisée en ce que** la ligne d'alimentation électrique est revêtue au moins sur une face d'une matière plastique polymérisable.

9. Ligne d'alimentation électrique selon l'une des revendications 1 à 8, **caractérisée en ce que** le trajet de courant de conductivité normale de chaque supraconducteur à haute température en forme de bande (30, 40) est fait d'un métal ou d'un alliage de métaux dont la conductibilité thermique diminue quand la température baisse.
